# EUROPÄISCHE PATENTANMELDUNG

(11) **EP 4 257 570 A1**
(43) Veröffentlichungstag der Anmeldung: **11.10.2023**
(21) Anmeldenummer: 22166887.4
(22) Anmeldetag: 06.04.2022
(51) Int. Cl.: C04B 26/06, C04B 40/06, C08F 290/06, C08F 292/00

(54) **VERBINDUNGEN AUF BASIS RECYCLIERTER VERBINDUNGEN FÜR MEHRKOMPONENTEN-REAKTIVHARZSYSTEME ZUR CHEMISCHEN BEFESTIGUNG**

(71) Anmelder: Hilti Aktiengesellschaft, 9494 Schaan (LI)
(72) Erfinder: Bürgel, Thomas, 86899 Landsberg (DE); Gnaß, Beate, 86368 Gersthofen (DE)
(74) Vertreter: Hilti Aktiengesellschaft Corporate Intellectual Property

(57) **Zusammenfassung**

Es wird eine Reaktivharzmischung für die chemische Befestigung, die mindestens eine Verbindung umfasst, die zumindest teilweise auf einer recyclierten Verbindung basiert, eine diese enthaltende Reaktivharzkomponente und ein Mehrkomponenten-Reaktivharzsystem sowie deren Verwendung für die chemische Befestigung beschrieben. Ferner wird die Verwendung von mindestens einer Verbindung, die zumindest teilweise auf einer recyclierten Verbindung basiert, in einer Reaktivharzmischung, einer Reaktivharzkomponente oder in einem Mehrkomponenten-Reaktivharzsystem mit einer Reaktivharzkomponente und einer Härterkomponente zur Erhöhung der Recyclingquote, beschrieben.

## Beschreibung

Die vorliegende Erfindung betrifft eine Reaktivharzkomponente (A) auf Basis radikalisch härtbarer Verbindungen für ein Mehrkomponenten-System, eine Härterkomponente (B) mit einem Härtungsmittel für radikalisch härtbare Verbindungen sowie ein Mehrkomponenten-System zur chemischen Befestigung von Konstruktionselementen enthaltend recyclierte Monomere. Ferner betrifft die vorliegende Erfindung die Verwendung von pulverisierten Recyclingmaterial zur Verbesserung der Recycling-Quote eines Mehrkomponenten-Systems.

### Hintergrund

Im Laufe der letzten Jahre ist es auch im Baugewerbe immer wichtiger geworden die Kohlenstoffdioxidbilanz zum Schutz des Klimas zu verbessern. Zur Herstellung von chemischen Produkten, insbesondere chemischen Dübeln, werden der Natur Rohstoffe entnommen und diese nach Verwendung als Müll entsorgt. Bei der Verarbeitung der Rohstoffe hin zum Endprodukt wird konstant Kohlenstoffdioxid freigesetzt, welches klimaschädlich ist.

Für jedes Produkt kann ein sogenannter CO₂-Fußabdruck (carbon footprint, CFP) ermittelt werden, der dessen CO₂-Bilanz beschreibt. Der CFP eines Produkts wird üblicherweise im Rahmen eines Life-Cycle Assessments nach ISO 14040/14044 bestimmt. Die Verwendung von recyclierten Rohstoffen verbessert den CO₂-Fußabdruck eines Produktes in der Regel.

Grundsätzlich reduziert der Einsatz von Recyclingmaterial die Verwendung von nativen Rohstoffen. Ein hoher Anteil von recyclierten Materialien schont deshalb die Umwelt. Eine Quantifizierung des reduzierten Ressourcenverbrauchs ist einfach über die Angabe der sogenannten Recycling-Quote möglich. Dieser Wert beschreibt den gewichtsprozentualen Anteil eines Produktes, welcher aus Recyclingmaterial besteht. Da auch gemischte Rohstoffe oder chemische Verbindungen aus nativen und recyclierten Materialien bestehen können, wird immer der Massenanteil zugrunde gelegt, der tatsächlich wiederverwendet wurde.

Die Patentschriften DE10 2014 103 923 A1 und DE10 2014 103 924 A1 schlagen den Einsatz von biogenen Rohstoffen zur Herstellung von chemischen Dübeln vor. Unter dem Begriff der biogenen Rohstoffe versteht man Biomasse bzw. nachwachsende Rohstoffe. Die Verwendung von biogenen Rohstoffen kann rechnerisch einen Beitrag zur Verringerung des CFPs leisten, da die CO₂-Bilanz nachwachsender Rohstoffe als negativ eingestuft wird.

Biogene Rohstoffe haben jedoch den entscheidenden Nachteil, dass diese oftmals in direkter Konkurrenz zu Nahrungsmitteln verwendet werden. Ferner werden biogene Rohstoffe teilweise unter ökologisch nicht zu vertretenden Methoden, wie beispielsweise durch die Rodung des Regenwaldes, zur Generierung von Anbauflächen gewonnen. Hier ist beispielhaft Zuckerrohr zu nennen, welches über Bio-Ethanol weiter zu Polyethylen verarbeitet wird. Somit kann der Einsatz biogener Rohstoffe insgesamt kritisch zu bewerten sein.

Es besteht daher Bedarf an Rohstoffen, die zur Herstellung von chemischen Dübeln verwendet werden können, ohne klimaschädliches CO₂-freizusetzen und die nicht in Konkurrenz zur Nahrungsmittelproduktion stehen. Um dies zu erreichen, sollen die Mehrkomponenten-Systeme zur Herstellung der chemischen Dübel eine möglichst hohe Recycling-Quote aufweisen. Der Einsatz entsprechender Recyclingmaterialien soll einen möglichst geringen Einfluss auf die mit dem chemischen Dübel zu erreichende Lastwerte haben. Um dem Aspekt der Nachhaltigkeit Rechnung zu tragen, ist eine reduzierte Perfomance akzeptabel.

In einer bisher unveröffentlichten Europäischen Patentanmeldung EP 21 207137.7 (Anmeldetag 09.11.2021) wird zur Reduzierung des CO₂-Fußabdrucks die Verwendung von pulverisierten Recyclingmaterialien als Füllstoff vorgeschlagen. Dieser Ansatz zur Produktverbesserung kann sehr gut mit der folgenden Erfindung kombiniert werden.

Der CO2-Fußabdruck kann zudem noch weiter verbessert werden, wenn bei der Herstellung von recyclierten Monomeren zusätzlich bio-basierte Rohstoffe verwendet werden. Bevorzugt werden dabei bio-basierte Rohstoffe verwendet, die - wie Glycerin aus der Produktion von Bio-Diesel - ebenfalls als Nebenprodukt anfallen.

### Beschreibung der Erfindung

Überraschenderweise hat sich gezeigte, dass durch den Einsatz von recyclierten Monomeren chemische Dübel hergestellt werden können, die eine verbesserte Recycling-Quote aufweisen. Die CO₂-Bilanz entsprechender Mehrkomponenten-Systeme zur Herstellung chemischer Dübel ist deutlich günstiger als die CO₂-Bilanz bekannter Mörtelmassen, die als chemische Dübel zum Einsatz kommen. Da es sich bei den Ausgangsstoffen zur Herstellung recyclierter Monomeren um Abfallprodukte handelt, stehen die erfindungsgemäß eingesetzten Rohstoffen nicht in Konkurrenz zur Nahrungsmittelproduktion. Die aus dem erfindungsgemäßen Mehrkomponenten-System hergestellten chemischen Dübel zeigen ein akzeptables Lastenniveau.

Ein erster Gegenstand der Erfindung ist eine Reaktivharzmischung nach Anspruch 1, die mindestens eine Verbindung V1 umfasst, die zumindest teilweise auf einer recyclierten Verbindung Vr1 basiert.

Ein zweiter Gegenstand der Erfindung ist eine Reaktivharzkomponente nach Anspruch 12, die die erfindungsgemäße Reaktivharzmischung enthält, umfasst.

Ein dritter Gegenstand der Erfindung ist eine Härterkomponente (B) mit einem Härtungsmittel für ein Reaktivharz mit mindestens einer radikalisch härtbaren Verbindung, wobei die Härterkomponente (B) mindestens eine Verbindung V2, die auf einer recyclierten Verbindung Vr2 basiert, umfasst.

Ein vierter Gegenstand der Erfindung ist ein Mehrkomponenten-Reaktivharzsystem nach Anspruch 15, welches die erfindungsgemäße Reaktivharzkomponente und eine Härterkomponente oder die erfindungsgemäße Härterkomponente umfasst.

Ein fünfter, sechster und siebter Gegenstand der Erfindung ist die Verwendung der erfindungsgemäßen Reaktivharzmischung, der erfindungsgemäßen Reaktivharzkomponente und des erfindungsgemäßen Mehrkomponenten-Reaktivharzsystems zur chemischen Befestigung von Verankerungsmitteln in Bohrlöchern oder zum baulichen Kleben nach Anspruch 21.

Ein achter Gegenstand der Erfindung ist die Verwendung von mindestens einer Verbindung, die zumindest teilweise auf einer recyclierten Verbindung basiert, in einer Reaktivharzmischung, einer Reaktivharzkomponente oder in einem Mehrkomponenten-Reaktivharzsystem mit einer Reaktivharzkomponente und einer Härterkomponente zur Erhöhung der Recyclingquote.

Im Sinne der Erfindung bedeuten die verwendeten Begriffe:
- *"Verbindung, die zumindest teilweise auf einer recyclierten Verbindung basiert"* eine Substanz, die ein aufbereitetes Alt- oder Abfallprodukt ist, also auf einer recyclierten Verbindung basiert bzw. aus dieser besteht, oder unter Verwendung eines aufbereiteten Alt- oder Abfallproduktes hergestellt wurde und Strukturelemente aus dem Alt- oder Abfallprodukt enthält, also teilweise auf einer recyclierten Verbindung basiert bzw. besteht;
- *"Verbindung V1, die zumindest teilweise auf einer recyclierten Verbindung Vr1 basiert"* eine polymerisierbare Substanz, die ein aufbereitetes Alt- oder Abfallprodukt ist oder unter Verwendung eines aufbereiteten Alt- oder Abfallproduktes hergestellt wurde und Strukturelemente aus dem Alt- oder Abfallprodukt enthält;
- *"Verbindung V2, die zumindest teilweise auf einer recyclierten Verbindung Vr2 basiert"* eine flüssige, organische Substanz, die ein aufbereitetes Alt- oder Abfallprodukt ist oder unter Verwendung eines aufbereiteten Alt- oder Abfallproduktes hergestellt wurde und Strukturelemente aus dem Alt- oder Abfallprodukt enthält;
- *"Recyclingmaterial"* ein Alt- oder Abfallmaterial, welches durch einen Aufbereitungsprozess in einen Wertstoff überführt wird, der nach der Aufbereitung Bestandteile oder Strukturelemente aus dem Alt- oder Abfallmaterial enthält;
- *"bio-basierte"* Rohstoffe (auch *"nachwachsende"* Rohstoffe genannt), die vollständig oder zum Teil aus pflanzlichen oder tierischen Produkten gewonnen werden.
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet; die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivharz"* eine üblicherweise feste oder hochviskose *"radikalisch härtbare",* d.h. polymerisierbare Verbindung, welche durch Polymerisation härtet und eine Harzmatrix bildet; das Reaktivharz ist das Umsetzungsprodukt einer Bulkreaktion an sich; hiervon ist auch der Reaktionsansatz zur Herstellung des Backbone-Harzes nach beendeter Reaktion umfasst, der ohne Isolierung des Produkts vorliegt und daher neben der radikalisch härtbaren Verbindung, das Reaktivharz, einen Reaktivverdünner, einen Stabilisator und einen Katalysator, sofern verwendet, enthalten kann;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Reaktivharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzmischung"* eine flüssige Mischung von Reaktivharz, Reaktivverdünnern und optional weiteren Komponenten, wie Beschleunigern und Inhibitoren, die durch Zusatz von Füllstoffen und weiteren Additiven, z.B. Rheologiehilfsmitteln zur Reaktivharzkomponente formuliert wird.
- *"Reaktivharzkomponente"* eine flüssige oder viskose Mischung aus Reaktivharz, Füllstoffen, Reaktivverdünnern und optional weiteren Komponenten, z.B. Füllstoffen, Additiven; typischerweise ist die Reaktivharzkomponente eine der beiden Komponenten eines Zweikomponenten-Reaktivharz-Systems zur chemischen Befestigung;
- *"Phlegmatisierungsmittel"* ein flüssiger Bestandteil einer Härterkomponente, der die Fließfähigkeit der Härterkomponente eines Zwei- oder Mehrkomponenten-Systems gewährleistet.
- *"Härterkomponente"* eine Zusammensetzung, die einen Initiator für die Polymerisation einer radikalisch härtbaren Verbindung enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- *"(Meth)acηl...l...(meth)acηl...",* dass sowohl die "Methacryl.../...methacryl..."- als auch die "Acryl.../...acryl... "-Verbindungen gemeint sein sollen; bevorzugt sind in der vorliegenden Erfindung "Methacryl... /... methacryl... "-Verbindungen gemeint;
- *"Epoxy(meth)acrylaf'* ein Epoxidharz, das Acrylat- oder Methacrylatgruppen aufweist und im wesentlichen Epoxygruppen-frei ist;
- *"Alkyl"* einen gesättigten Kohlenwasserstoffrest, der verzweigt oder unverzweigt sein kann; bevorzugt ein C₁-C₇-Alkyl, besonders bevorzugt ein C₁-C₄-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;
- *"Hydroxyalkyl"* ein Alkyl, das mindestens eine Hydroxylgruppe als Substituenten trägt;
- *"Alkenyl"* einen ungesättigten Kohlenwasserstoffrest mit mindestens einer Doppelbindung, der verzweigt oder unverzweigt sein kann; bevorzugt ein C₂-C₂₀-Alkenyl, besonders bevorzugt ein C₂-C₆-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;
- *"Alkinyf"* einen ungesättigten Kohlenwasserstoffrest mit mindestens einer Dreifachbindung, der verzweigt oder unverzweigt sein kann; bevorzugt ein C₂-C₂₀-Alkinyl, besonders bevorzugt ein C₂-C₆-Alkinyl, also ein Alkinyl ausgewählt aus der Gruppe bestehend aus Ethinyl, Propinyl, Butinyl, Pentinyl und Hexinyl; Ethinyl, Propinyl und Butinyl sind besonders bevorzugt, und ganz besonders bevorzugt ist Ethinyl;
- *"kalthärtend",* dass ein Reaktivharz-System bei Raumtemperatur vollständig aushärten kann;
- *"ein", "eine", "einer"als* Artikel vor einer chemischen Verbindungsklasse, z.B. vor dem Wort "Epoxymethacrylat", dass eine oder mehrere unter diese chemische Verbindungsklasse fallende Verbindungen, z.B. verschiedene Epoxymethacrylate, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*
- *"etwa"* oder *"circa"* oder "ca." vor einem Zahlenwert einen Bereich von ± 10% dieses Wertes, bevorzugt ± 2% dieses Wertes, bevorzugter ± 1% dieses Wertes, besonders bevorzugt ± 0% dieses Wertes (also genau diesen Wert).
- *"Recycling-Quote, RQ"* ist der gewichtsprozentuale Anteil an Recyclingmaterial in einem Rohstoff, z.B. einem Monomer, der betrachteten Reaktivharz- oder Härterkomponente oder des gesamten Mehrkomponenten-Reaktivharz-Systems. Die Bezugsgröße ist dabei anzugeben. Bei der Verwendung verschiedener recyclierter Materialien (z.B. recyclierter Monomere und recyclierter Füllstoffe) enthält die Recycling-Quote für die betrachtete Formulierung den gewichtsprozentualen Anteil aller eingesetzter recyclierter Materialien oder Strukturelemente.
- *"Bio-Quote"* ist der gewichtsprozentuale Anteil an bio-basierten Material in einem Rohstoff, z.B. einem Monomer, der betrachteten Reaktivharz- oder Härterkomponente oder des gesamten Mehrkomponenten-Reaktivharz-Systems. Die Bezugsgröße ist dabei anzugeben. Bei der Verwendung verschiedener nachwachsender Rohstoffe enthält die Recycling-Quote für die betrachtete Formulierung den gewichtsprozentualen Anteil aller enthaltener bio-basierter Strukturelemente.
- *"Masse-bilanzierte Rohstoffe"* werden in der chemischen Industrie angeboten, um bio-basierte oder recyclierte Materialien, die in der Wertschöpfungskette eingesetzt wurden, durch Zertifizierung Verkaufsprodukten zurechnen zu können. Die Produkte enthalten nicht zwangsläufig Strukturelemente der eingesetzten Materialien. Trotzdem ist die Verwendung von masse-bilanzierten Rohstoffen geeignet, den Anteil an bio-basiertem oder recycliertem Material (also auch die Recycling-Quote) zu erhöhen.
- *"Strukturelemente"* Atomgruppen einer organischen Substanz, die unter Erhalt ihrer Struktur von einem Molekül in ein anderes überführt werden. Zum Beispiel besteht Ethylacetat aus einer Ethoxy- und einer Acetylstruktur, die durch Umesterung mit Butanol unter Erhalt der Strukturelemente zu Butylacetat und Ethanol umgewandelt werden können. Stammt das Butanol aus einem Altstoff, enthält das gebildete Butylacetat die recyclierte Butoxy-Struktur:

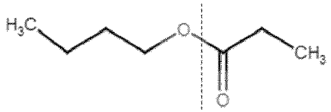

Alle in diesem Text genannten Normen (z.B. DIN-Normen) wurden in der zum Anmeldetag dieser Anmeldung aktuellen Ausgabe verwendet.

### Verbindung, die zumindest teilweise auf einer recyclierten Verbindung basiert

Gemäß einem Gegenstand der vorliegenden Erfindung umfasst die Reaktivharzmischung mindestens eine Verbindung V1, die zumindest teilweise auf einer recyclierten Verbindung Vr1 basiert. Gemäß einem weiteren Gegenstand der vorliegenden Erfindung umfasst die Härterkomponente e Verbindung V2, die zumindest teilweise auf einer recyclierten Verbindung Vr2 basiert. Das erfindungsgemäße Mehrkomponenten-System umfasst die erfindungsgemäße Reaktivharzkomponente und eine Härterkomponente, insbesondere die erfindungsgemäße Härterkomponente. In einer bevorzugten Ausführungsform umfasst das Mehrkomponenten-System mindestens in der Reaktivharzkomponente mindestens eine Verbindung, die zumindest teilweise auf einer recyclierten Verbindung basiert. In einer bevorzugten Ausführungsform des erfindungsgemäßen Mehrkomponenten-Systems enthalten sowohl die Reaktivharzkomponente als auch die Härterkomponente eine Verbindung, die zumindest teilweise auf einer recyclierten Verbindung basieret, oder eine andere recyclierte Substanz, wie einen aus Altprodukten gewonnenen Weichmacher. Hiermit lassen sich besonders hohe Recycling-Quoten einstellen.

In einer weiteren, bevorzugten Ausführungsform enthält das erfindungsgemäße Mehrkomponenten-System neben mindestens einem recyclierten Monomer mindestens einen bio-basierten Rohstoff.

In einer noch weiteren, bevorzugten Ausführungsform enthält das erfindungsgemäße Mehrkomponenten-Reaktivharzsystem neben der mindestens einen Verbindung, die zumindest teilweise auf einer recyclierten Verbindung basiert, mindestens einen masse-bilanziert bio-basierten oder masse-bilanziert recyclierten Rohstoff.

In einer weiteren, besonders bevorzugten Ausführungsform enthält das erfindungsgemäße Mehrkomponenten-Reaktivharzsystem neben der mindestens einen Verbindung, die zumindest teilweise auf einer recyclierten Verbindung basiert, zusätzlich pulverisiertes Recyclingmaterial zur weiteren Erhöhung der Recycling-Quote.

In einer weiteren, ganz besonders bevorzugten Ausführungsform enthält das erfindungsgemäße Mehrkomponenten-Reaktivharzsystem gleichzeitig mindestens eine Verbindung, die zumindest teilweise auf einer recyclierten Verbindung basiert, sowie mindestens einen weiteren recyclierten und/oder bio-basierten Rohstoff, z.B. pulverisiertes Recyclingmaterial und mindestens einen masse-bilanziert bio-basierten und/oder masse-bilanziert recyclierten Rohstoff.

Vorzugsweise weist das Mehrkomponenten-Reaktivharzsystem eine Recycling-Quote bezogen auf das Mehrkomponenten-Reaktivharzsystem von mindestens 2 Gew.-% auf. Weiter bevorzugt liegt die Recycling-Quote bezogen auf das Mehrkomponenten-System in einem Bereich von 3 bis 80 Gew.-%, weiter bevorzugt in einem Bereich von 5 bis 60 Gew.-%, besonders bevorzugt in einem Bereich von 10 bis 50 Gew.-%. Die prozentualen Mengenangaben sind jeweils auf das Gesamtgewicht des Mehrkomponenten-Reaktivharzsystems (Reaktivharzkomponente und Härterkomponente, gemischt im entsprechenden Volumenverhältnis) bezogen.

Bezogen auf die Reaktivharzkomponente weist das Mehrkomponenten-Reaktivharzsystem eine Recycling-Quote bezogen auf die Reaktivharzkomponente von mindestens 5 Gew.-% auf. Weiter bevorzugt liegt die Recycling-Quote zwischen 5 und 80 Gew.-%; besonders bevorzugt in einem Bereich von 10 bis 60 Gew.-%. Die prozentualen Mengenangaben sind jeweils auf das Gesamtgewicht der Reaktivharzkomponente bezogen.

Bezogen auf die Reaktivharzmischung weist das Mehrkomponenten-Reaktivharzsystem eine Recycling-Quote bezogen auf die Reaktivharzmischung von mindestens 5 Gew.-% auf. Weiter bevorzugt liegt die Recycling-Quote zwischen 5 und 80 Gew.-%; besonders bevorzugt in einem Bereich von 10 bis 50 Gew.-%. Die prozentualen Mengenangaben sind jeweils auf das Gesamtgewicht der Reaktivharzmischung bezogen.

Der Begriff *"Verbindung, die zumindest teilweise auf einer recyclierten Verbindung basiert"* im Sinne der vorliegenden Erfindung beschreibt ein Reaktivharz, einen Reaktivverdünner oder ein Phlegmatisierungsmittel, die aus einem Abfallmaterial gewonnen werden, indem dieses durch einen Aufbereitungsprozess in einen Wertstoff überführt oder unter Verwendung des aufbereiteten Wertstoffs hergestellt und Strukturelemente des Altstoffs enthält.

Als Abfallmaterialien zur Gewinnung von recyclierten Monomeren können zahlreiche dem Fachmann bekannte Materialien verwendet werden. Bevorzugte Abfallmaterialien sind verschiedene Arten von Altplastik, Gummi oder chemische Dübel.

Bevorzugt sind sortenreine Plastikabfälle, die durch chemische Behandlung (chemisches Recycling) in Ihre monomeren Bestandteile aufgespalten werden können.

Besonders bevorzugt ist die Aufbereitung von Polymethylmethacrylat (Plexiglas) zu recycycliertem Methylmethacylat. Diese Form der Aufbereitung ist inzwischen kommerziell möglich und wird z.B. durch die Fa. Monómeros del Valles S.L. in Terrassa (Barcelona), España durchgeführt.

Gemäß einer bevorzugten Ausführungsform kann recycliertes Methylmethacrylat als Verbindung, die zumindest teilweise aus einer recyclierten Verbindung besteht, in Reaktivharz-Systemen verwendet werden. Da Methylmethacrylat flüchtig ist und einen starken Geruch aufweist, ist es jedoch gemäß einer besonders bevorzugten Ausführungsform sinnvoll, Methylmethacrylat durch Umesterung mit mono-, bi- oder höherfunktionellen Alkoholen zu mono-, bi- oder höherfunktionellen Methacrylsäureestern umzusetzen und diese Methacrylsäureester in Reaktivharz-Systemen zu verwenden.

Geeignete Alkohole für die Umesterung mit Methylmethacrylat sind bevorzugt Isobornylalkohol und kurzkettige oder cyclische Di- oder Triole, wie Ethylenglycol, 1,2- oder 1,3-Propylenglycol, 1,3- oder 1,4-Butandiol, Di-, Tri- oder Tetra-Ethylenglycol, Polyethylenglycol verschiederer Molmasse; bevorzugt PEG200 sowie Mischungen dieser Oligo-Ethylenglycole oder die analogen Oligo-Propylenglycole sowie gemischte Oligo-Ethylen-/Propylenglycole. Weitere erfindungsgemäße Diole sind nicht abschließend Tricyclodecandimethanol oder Isosorbid.

Bevorzugt ist auch die Umesterung mit recycliertem Methylmethacrylat sind Ethylen- und Proplyenglycol sowie deren Oligomere (Di-, Tri-, Tetraethylen- oder -propylenglycole und gemischte Ethylen/Propylenglycole mit Molmassen zwischen 100 und 500 g/mol), Glycerol, Trimethylolpropan, Pentaerythritol oder Dipentaerithrytol sowie verschiedene Zucker bzw. Zuckeralkohole, z.B. Sorbitol, Mannitol oder Glucose.

Bei der Verwendung von mindestens bifunktionellen Alkoholen ist es möglich, Mischungen von hydroxyfunktionellen Mono- und Di-Methacrylaten oder Di-, Tri- und ggf. höherfunktionelle Methacrylaten herzustellen. Da es bei der Formulierung von Reaktivharz-Systemen oft sinnvoll ist, Mischungen von Reaktivverdünnern zu verwenden, können solche Mischungen gezielt hergestellt und ohne weitere Aufarbeitung verwendet werden.

Durch Umesterung von Methylmethacrylat mit Ethylenglycol kann beispielsweise eine Mischung von Hydroxyethylmethacrylat (HEMA) und Diethylenglycoldimethacrylat (EGDMA) erhalten werden. Bei Verwendung von Glycerin entsteht eine Mischung aus Glycerinmono-, -di- und -trimethacrylat, wobei der Gehalt an Hydroxylgruppen über den Umsatz gesteuert werden kann.

Über den Umsatz lässt sich auch die Recycling-Quote der entsprechenden Monomere einstellen. Ein im Mittel bifunktionelles Glycerindimethacrylat enthält beispielsweise zwei recyclierte Methacrylat-Struktureinheiten C₄H₅O (Molmasse 2 * 69 g/mol) sowie die Glycerol-Struktur C₃H₆O₃ (Molmasse 90 g/mol) und enthält damit 60% recycliertes Material. Das entspricht einer Recycling-Quote von 60% bezogen auf dieses Monomer.

Dabei liegt die Annahme zugrunde, dass das Sauerstoffatom des Esters dem (nicht recyclierten) Alkohol zugerechnet wird.

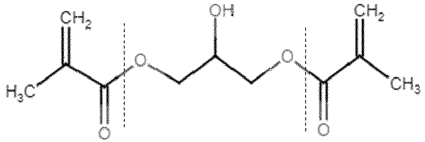

Wird das Glycerol dabei aus einer nachhaltigen Quelle bezogen, beispielsweise als Abfallprodukt der Biodiesel-Herstellung, ist der erzeugte Reaktivverdünner bis zu 100% recycliert.

Gleichzeitig erhöht der Einsatz von Alkoholen, die aus nachwachsenden Rohstoffen hergestellt wurden, in der Umesterung mit recycliertem Methylmethacrylat die Bio-Quote des daraus hergestellten Reaktivharz-Systems. Beispielhaft genannt ist hier wiederum die Herstellung von Glycerol-Methacrylaten aus bio-basiertem Glycerol und recycliertem Methylmethacrylat.

Hydroxyfunktionelle Methacrylate aus der oben beschriebenen Synthese können - auch in Mischung mit den gleichzeitig gebildeten Di- oder Trimethacrylaten - direkt zu den in der chemischen Befestigunstechnik etablierten Urethan-Methacrylat-Reaktivharzen weiterverarbeitet werden. Wird 1,2-Propylenglycol mit recycliertem Methylmethacrylat umgeestert, bildet sich eine Mischung aus Hydroxypropylmethacrylat und 1,2-Propylenglycoldimethacrylat. Durch Zugabe von bifunktionellem Isocyanat (z.B. Diphenylmethandiisocyanat, MDI) kann analog zu WO2019/007667 direkt das entsprechende Urethanmethacrylat-Reaktivharz erzeugt werden. Auch dieses Harz enthält recyclierte Methacrylat-Struktureinheiten und ist damit ein recycliertes Monomer.

Wird das Urethan-Methacrylat unter Verwendung von masse-bilanziert recycliertem Isocyanat hergestellt, erhöht sich die Recycling-Quote entsprechend.

Die Verbindung, die zumindest teilweise auf einer recyclierten Verbindung basiert, insbesondere der Verbindung V1, die zumindest teilweise auf einer recyclierten Verbindung Vr1 basiert, ist vorzugsweise in einem gewichtsprozentualen Anteil von 2 bis 50 Gew.-% bezogen auf das Gesamtgewicht des Mehrkomponenten-Reaktivharzsystems (Reaktivharzkomponente + Härterkomponente, gemischt im jeweiligen Volumenverhältnis), insbesondere in einem Anteil von 5 bis 50 Gew.-%, weiter bevorzugt in einem Anteil von 10 bis 40 Gew.-%, noch weiter bevorzugt 10 bis 30 Gew.-%, in dem erfindungsgemäßen Mehrkomponenten-System enthalten.

Vorzugsweise liegt der gewichtsprozentuale Anteil des recyclierten Monomers in der Reaktivharzkomponente in einem Bereich von 3 bis 50 Gew.-%, insbesondere in einem Bereich von 5 bis 50 Gew.-%, weiter bevorzugt 10 bis 40 Gew.-%, bezogen auf das Gesamtgewicht der Reaktivharzkomponente.

Vorzugweise liegt der gewichtsprozentuale Anteil der Verbindung, die zumindest teilweise auf einer recyclierten Verbindung basiert, insbesondere der Verbindung V2, die zumindest teilweise auf einer recyclierten Verbindung Vr2 basiert, in der Härterkomponente in einem Bereich von 3 bis 50 Gew.-%, insbesondere in einem Bereich von 5 bis 50 Gew.-%, bezogen auf das Gesamtgewicht der Härterkomponente.

### Reaktivharz

Als radikalisch härtbare Verbindungen sind Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon geeignet, wie sie dem Fachmann bekannt sind.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykolmono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat. Besonders bevorzugt sind dabei die entsprechenden Methacrylate, da die sterische Hinderung gegenüber Acrylaten zu besserer Alkalistabilität führt.

Besonders bevorzugt werden als (Meth)acrylverbindung, Verbindungen V1, die zumindest teilweise auf einer recyclierten Verbindung Vr1, inbesondere von (Meth)acrylsäureestern, basieren, verwendet. Ganz besonders bevorzugt ist die Verbindung V1, ein (Meth)acrylsäureester, der aus recycliertem Methyl(meth)acrylat erhalten wird. Somit sind Verbindungen bevorzugt, wie hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykolmono(meth)acrylat, bevorzugt Acryl- bzw. Methacrylsäurehydroxyalkylester, wie Hydroxyethyl(meth)acrylat, Hydroxypropyl(meth)acrylat, Polyoxyethylen(meth)acrylat und Polyoxypropylen(meth)acrylat, die jeweils aus recycliertem Methyl(meth)acrylat erhalten werden können.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylesterharz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Glycidyl(meth)acrylatharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylatfunktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Die Epoxy(meth)acrylatharze werden durch Umsetzung einer Epoxidgruppen aufweisenden organischen Verbindung mit Acrylsäure oder Methacrylsäure erhalten, so dass die Harze notwendigerweise Acryloxygruppen oder Methacryloxygruppen an den Molekülenden und Hydroxylgruppen in 2-Position zur gebildeten Acryloxy- bzw. Methacryloxygruppe (im Folgenden auch α-Hydroxylgruppen genannt) in der Hauptkette des Moleküls aufweisen. Zweckmäßig werden pro Epoxidäquivalent 0,7 bis 1,2 Carboxyläquivalente (Meth)acrylsäure eingesetzt. Die Epoxidgruppen aufweisenden organischen Verbindungen und die (Meth)acrylsäure werden dabei bevorzugt in etwa stöchiometrischen Verhältnissen eingesetzt, d.h. pro Epoxidäquivalent der organischen Verbindung wird etwa ein Äquivalent (Meth)acrylsäure eingesetzt. Die Umsetzung erfolgt in Gegenwart geeigneter, dem Fachmann hierfür bekannter Katalysatoren, wie quartären Ammoniumsalzen.

Besonders bevorzugt sind die Epoxy(meth)acrylate alternative Verbindungen V1, die durch Einsatz von recycliertem Methyl(meth)acrylat, das ggf. durch Verseifung zu (Meth)acrylsäure umgewandelt werden kann, als recyclierter Verbindungen Vr1 erhalten werden können.

Zweckmäßig werden als Epoxidgruppen aufweisende organische Verbindungen solche mit einem Molekulargewicht eingesetzt, das einem Zahlenmittel der Molmasse *M̅ₙ* im Bereich von 129 bis 2.400 g/Mol entspricht und die im Mittel mindestens eine, bevorzugt 1,5 bis 2 Epoxidgruppen pro Molekül enthalten. Besonders bevorzugt sind die Epoxidgruppen vom Glycidylether- oder Glycidylestertyp, die durch Umsetzen eines Epihalohydrins, insbesondere Epichlorhydrin, mit einer mono- oder multifunktionellen aliphatischen oder aromatischen Hydroxyverbindungen, Thiolverbindungen oder Carbonsäuren oder einem Gemisch davon erhalten werden. Die erhaltene Epoxidgruppen aufweisende organische Verbindung weist eine Epoxidäquivalentmasse (EEW) bevorzugt im Bereich von 87 bis 1.600 g/Val, stärker bevorzugt im Bereich von 160 bis 800 g/Val und am stärksten bevorzugt im Bereich von 300 bis 600 g/Val auf.

Beispiele geeigneter Epoxidgruppen aufweisender Verbindungen sind Polyglycidylether mehrwertiger Phenole wie beispielsweise Brenzkatechin, Resorcin, Hydrochinon, 4,4'-Dihydroxydiphenylmethan, 2,2-(4,4'-Dihydroxydiphenyl)propan (Bisphenol-A), Bis(4-hydroxyphenyl)methan (Bisphenol F), 4,4'-Dihydroxydiphenylsulfon (Bisphenol S), 4,4'-Dihydroxydiphenylcyclohexan, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), wie Phenol-Novolak-Harz, Cresol-Novolak-Harz.

Weiter können folgende beispielhaft, jedoch nicht einschränkend, genannt werden: Glycidylether von Monoalkoholen, wie beispielsweise n-Butanol oder 2-Ethylhexanol; oder Glycidylether mehrwertiger Alkohole, wie beispielsweise aus 1,3-Butandiol, 1,4-Butandiol, 1,6-Hexandiol, Glycerin, Benzylalkohol, Neopentylglykol, Ethylenglykol, Cyclohexandimethanol, Trimethylolpropan, Pentaerythrit und Polyethylenglykolen, Triglycidylisocyanurat; Polyglycidylthioether mehrwertiger Thiole, wie Bismercaptomethylbenzol; oder Glycidylester von Monocarbonsäuren, wie Versaticsäure; oder Glycidylester mehrwertiger, aromatischer und aliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Als Epoxidgruppen aufweisende organische Verbindungen sind Diglycidylether zweiwertiger Hydroxyverbindungen der allgemeinen Formel (I) besonders bevorzugt 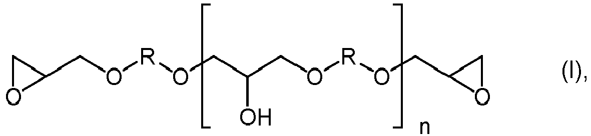 in der R eine unsubstituierte oder substituierte aliphatische oder aromatische Gruppe, bevorzugt eine aromatische Gruppe, stärker bevorzugt eine aromatische Gruppe mit 6 bis 24 Kohlenstoffatomen ist und der Mittelwert für n gleich 0 bis 3 ist. R ist besonders bevorzugt eine Gruppe vom Bisphenoltyp, wie Bisphenol A, Bisphenol F oder Bisphenol S, oder vom Novolaktyp, wobei eine Gruppe vom Bisphenoltyp ganz besonders bevorzugt ist. Der Mittelwert für n ist bevorzugt etwa 0,1, etwa 1 oder etwa 2. Dabei werden im Sinne der vorliegenden Erfindung Verbindungen, in denen n ~ 0,1 ist, als monomer und Verbindungen, in denen n ~ 1 oder 2 ist, als polymer bezeichnet.

Die polymeren Verbindungen haben gegenüber den monomeren Verbindungen den Vorteil, dass der Basisharzgehalt in der Harzmischung deutlich reduziert werden kann, was die Harzmischung wirtschaftlicher in der Herstellung macht, da hierdurch die Herstellungskosten reduziert werden können.

Im Sinne der Erfindung sind Vinylesterharze Oligomere oder Polymere mit mindestens einer (Meth)acrylat-Endgruppe, so genannte (Meth)acrylat-funktionalisierte Harze, wozu vor allem Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Besonders bevorzugt sind die Vinylesterharze alternative Verbindungen V1, die durch Einsatz von recyclierter (Meth)acrylsäure als recyclierter Verbindungen Vr1 erhalten werden können.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

### Beispiele für derartige Epoxy(meth)acrylate sind solche der Formel (I)

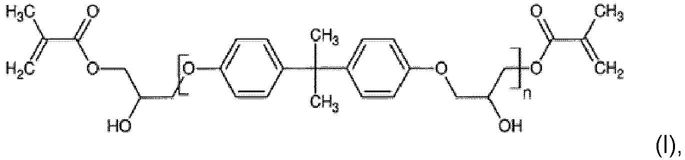

worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 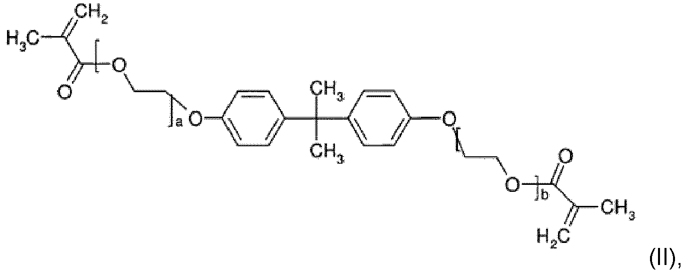 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)lsocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß bevorzugt verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das reaktivharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der Anteil des Reaktivharzes in der Reaktivharzkomponente beträgt bevorzugt von etwa 10 bis etwa 70 Gew.-%, stärker bevorzugt von etwa 20 bis etwa 60 Gew.-%, noch stärker bevorzugt von etwa 25 bis etwa 50 Gew.-%, bezogen auf die Reaktivharzkomponente.

### Reaktivverdünner

Die Reaktivharzmischung kann geeignete Reaktivverdünner enthalten, wie sie in den Anmeldungen EP 1 935 860 A1 und DE 195 31 649 A1 beschrieben sind. Vorzugsweise enthält die Reaktivharzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, A/,A/-Dimethylaminoethyl(meth)acrylat, *N,N-*Dimethylaminomethyl(meth)acrylat, Acetoacetoxyethyl(meth)acrylat, Isobornyl(meth)acηlat, 2-Ethylhexyl(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Glycerolformal(meth)acrylat; Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, a-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Der Reaktivverdünner kann gemäß der Erfindung eine Verbindung V1 sein, die zumindest teilweise auf einer Recyclierten Verbindung Vr1 basiert. Wie eingangs beschrieben, kann der Reaktivverdünner durch Umesterung mit einer recyclierten Verbindung Vr1, insbesondere recycliertem Methyl(meth)acrylat erhalten werden.

Besonders bevorzugt ist die mindestens eine Verbindung V1, die zumindest teilweise auf einer recyclierten Verbindung Vr1 basiert, aus der Gruppe bestehend aus 1,2-Ethylenglycoldimethacrylat, Di-, Tri-, Polyethylenglycoldimethacrylat, 1,4-Butandioldimethacrylat, 1,6-Hexandioldimethacrylat, Hydroxyethylmethacrylat, 2- oder 3-Hydroxypropylmethacrylat, Glycerin- und Trimethylolpropanmethacrylaten ausgewählt. In einer bevorzugten Ausführungsform der Erfindung wird eine oder mehrere dieser Verbindungen V1 als Reaktivverdünner und/oder Edukt für die Herstellung der (Meth)acrylat-basierten Reaktivharze verwendet.

Die Reaktivverdünner sind bevorzugt in einer Menge bis etwa 80 Gew.-%, besonders bevorzugt von etwa 10 bis etwa 60 Gew.-%, noch bevorzugter von etwa 30 bis etwa 60 Gew.-%, bezogen auf die Reaktivharzkomponente (A), im Reaktivharz vorhanden.

### Inhibitoren

Sowohl zur Stabilisierung des Reaktivharzes oder der das Reaktivharz enthaltenden Reaktivharzmischung als auch zur Einstellung der Harzreaktivität können in der erfindungsgemäßen Reaktivharzmischung ein oder mehrere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus N-Oxyl-Radikalen, Catecholen, Catecholderivaten und Phenothiazinen und ein Gemisch von zwei oder mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein oder als Kombination von zweien oder mehreren davon verwendet werden. Die Kombination von phenolischen und nicht-phenolischen Inhibitoren ist bevorzugt.

Der Inhibitor oder die Inhibitormischung wird in der Fachwelt bekannten üblichen Mengen zugesetzt, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz).

### Härterkomponente

Für die Härtung der radikalisch härtbaren Verbindung der zuvor beschriebenen Reaktivharzmischung wird eine Härterkomponente enthaltend ein Härtungsmittel verwendet.

Bevorzugt wird ein Härtersystem verwendet, welches das Härtungsmittel und einen Beschleuniger umfasst.

Dabei kann der Beschleuniger der Reaktivharzkomponente (A) zugegeben werden.

Die Härtung des Reaktivharzes kann mit einem Peroxid als Initiator initiiert werden. Dementsprechend beinhaltet in einer Ausführungsform das Härtersystem
- mindestens einen für die Härtung mit Peroxiden üblicherweise verwendeten Beschleuniger und
- als Initiator ein Peroxid.

Alle dem Fachmann bekannten Peroxide, die zum Härten von Epoxid(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems, wie es weiter unten genauer beschrieben wird. Die in den Beispielen verwendete Härterkomponente bzw. eine Härterkomponenten mit denselben Bestandteilen ist besonders bevorzugt.

Das Härtungsmittel ist bevorzugt in einer Menge von weniger als 3 Gew.-% bezogen auf das Gesamtgewicht der Härterkomponente (B) in dieser enthalten. Besonders bevorzugt ist das Härtungsmittel ein Peroxid und in einer Menge von weniger als 3 Gew.-% bezogen auf das Gesamtgewicht der Härterkomponente (B) in dieser enthalten und ganz besonders bevorzugt ist das Peroxid ein Dibenzoylperoxid und in einer Menge von weniger als 3 Gew.-% bezogen auf das Gesamtgewicht der Härterkomponente (B) in dieser enthalten. Hierdurch kann eine geringere Gefahrstoffkennzeichnung erreicht werden oder idealerweise ist keine Gefahrstoffkennzeichnung mehr erforderlich.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid kann das Härtersystem noch ein Phlegmatisierungsmittel enthalten, um das Peroxid zu stabilisieren. Entsprechende Phlegmatisierungsmittel sind aus der DE 3226602 A1, EP 0432087 A1 und EP 1 371 671 A1 bekannt.

Ein solches Härtersystem enthält bevorzugt Wasser als Phlegmatisierungsmittel. Neben dem Wasser kann das Härtersystem noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Enthalten diese weiteren Phlegmatisierungsmittel monomere Strukturelemente aus recyclierten Altstoffen, sind dies ebenfalls Verbindungen (Verbindungen V2), die zumindest teilweise aus recyclierten Verbindungen (recyclierte Verbindungen Vr2) basieren, im Sinne der vorliegenden Erfindung.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (z.B. BP40SAQ), Perkadox 40L-W (Fa. Nouryon), Luperox^{®} EZ-FLO (Fa. Arkema), Peroxan BP40W (Fa. Pergan).

Das Peroxid kann in einer Menge von 0,2 bis 35 Gew.-%, bevorzugt 1 bis 30 Gew.-%, besonders bevorzugt 5 bis 25 Gew.-%, bezogen auf die Härterkomponente, in der Härterkomponente enthalten sein.

In dem beschriebenen Härtersystem wird zusätzlich zu dem Peroxid ein Beschleuniger verwendet. Hierdurch wird die Härtungsreaktion beschleunigt. Dieser Beschleunigerwird der Reaktivharzkomponente zugegeben, um diesen räumlich getrennt vom Peroxid zu lagern und so dessen vorzeitigen Zerfall zu verhindern.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und ethoxyliertes para-Toluidin (Bisomer^{®} PTE).

In dieser, bevorzugten, Ausführungsform kann der Beschleuniger in einer Menge von 0,01 bis 10 Gew.-%, bevorzugt 0,1 bis 5 Gew.-%, besonders bevorzugt 0,1 bis 3 Gew.-%, bezogen auf die Harzkomponente, in der Reaktivharzkomponente enthalten sein.

Alternativ kann für die Härtung ein Härtersystem verwendet werden, welches peroxidfrei ist und die Bestandteile
- mindestens eine Manganverbindung als Beschleuniger und
- eine 1,3-Dioxoverbindung als Initiator
beinhaltet. Hierzu wird auf die DE 10 2011 078 785 A1 verwiesen.

Geeignete 1,3-Dioxoverbindungen sind Verbindungen der allgemeinen Formel (III) 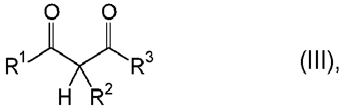 in der
R¹ und R³ jeweils unabhängig voneinander eine unverzweigte oder verzweigte, gegebenenfalls substituierte C₁-C₄-Alkylgruppe oder eine C₁-C₄-Alkoxygruppe sind,
R² eine unverzweigte oder verzweigte, gegebenenfalls substituierte C₁-C₄-Alkylgruppe oder eine C₁-C₄-Alkoxygruppeist, oder zusammen mit R¹ oder R³ einen gegebenenfalls substituierten fünf- oder sechsgliedrigen aliphatischen Ring bildet, welcher gegebenenfalls Heteroatome im oder am Ring umfasst.

In diesem Härtersystem ist es wesentlich, dass in der Verbindung der Formel (III) das Kohlenstoffatom, welches die zwei Carbonylgruppen miteinander verbindet, genau ein an dieses Kohlenstoffatom gebundenes Wasserstoffatom aufweist.

### Bevorzugt ist die Verbindung der allgemeinen Formel (III) eine Verbindung der Formel (IV)

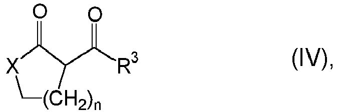

in der unabhängig X = C, O, n = 1, 2 und R³ eine unverzweigte oder verzweigte, gegebenenfalls substituierte C₁-C₄-Alkylgruppe oder eine C₁-C₄-Alkoxygruppeist. X ist stärker bevorzugt O. n ist stärker bevorzugt 1. R³ ist stärker bevorzugt eine C₁-C₄-Alkylgruppe.

Besonders bevorzugt ist die Verbindung der Formel (III) 2-Methyl-2,4-pentandion, α-Acetylbutyrolacton, Cyclopentanon-2-carbonsäureethylester oder Cyclopentanon-2-carbonsäuremethylester, wobei α-Acetylbutyrolacton am stärksten bevorzugt ist.

Als Beschleuniger wird eine Manganverbindung, insbesondere ein Mangansalz oder ein Mangankomplex verwendet. Es können auch Gemische von Mangansalzen und/oder Mangankomplexen verwendet werden.

Als besonders geeignet haben sich Mangansalze oder Mangankomplexe, insbesondere basierend auf 1,3-Dioxoverbindungen, wie Acetylacetonat (Petan-2,4-dion), und Carbonsäuren, wie Naphthenate, Octoate, Ethylhexanoate oder gesättigte Fettsäuren, erwiesen. Hinsichtlich der Manganverbindung bestehen keine Einschränkungen. Zweckmäßig ist die Manganverbindung in unpolaren Lösungsmitteln löslich. Ganz besonders geeignet ist Mn(II)-octoat.

Ebenfalls alternativ kann für die Härtung ein Härtersystem verwendet werden, welches die Bestandteile:
- als Beschleuniger mindestens ein Metallsalz und
- als Initiator mindestens eine Thiol- und/oder Thiolester-Gruppen beinhaltende Verbindung,
beinhaltet.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können.

Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole, der allgemeinen Formel HS-[CH₂-CH₂-O]ₙ-CH₂-CH₂-SH, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure-S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Als weitere Alternative kann für die Härtung ein Härtersystem verwendet werden, welches die folgenden Bestandteile beinhaltet:
- als Beschleuniger mindestens ein Metallsalz und
- als Initiator mindestens eine CH-acide Verbindung der Formel (V) 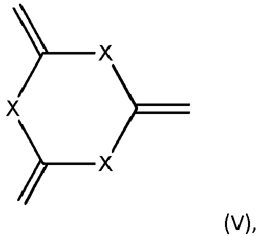 worin
   (i)
      - A- für -C(R¹)(R²)- steht,
      - X- für eine Bindung, für -NR³- oder für -(CR⁴R⁵)ₚ- steht, oder für -O- steht,
         Y für NR⁶ oder für (CR⁷R⁸)_{q} steht, oder für O steht,
         wobei wenn X für O steht auch Y für O steht;
         wobei vorzugsweise X für (CR⁴R⁵)ₚ steht und Y für CR⁷R⁸ steht,
         oder X für NR³ und Y für NR⁶ steht;
         Z¹ für O, S, S=O oder S(=O)₂ steht,
         Z² für O, S, S=O oder S(=O)₂ steht,
         Z³ für O, S, S=O oder S(=O)₂ oder für R⁹ und R¹⁰ steht,
         p für 1, 2 oder 3 steht, vorzugsweise für 1 oder 2
         q für 1, 2 oder 3 steht, vorzugsweise für 1;
         und die Reste R¹, R², R³, R⁴, R⁵, R⁶, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
         vorzugsweise ausgewählt aus O, N, wie NH oder N-Alkyl, und S aufweisen, mit der Maßgabe, dass mindestens einer der Reste R¹ und R² Wasserstoff bedeutet, oder
   (ii) offenkettige Verbindungen,
      worin das die Brücke bildende Glied -C(=Z³)- fehlt,
      - A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁-C₄-Alkylcarbonylmethylgruppe stehen,
         R¹ und R² beide Wasserstoff bedeuten und
         Z¹ und Z² die genannten Bedeutungen haben;
         oder X für eine jeweils unverzweigte oder verzweigte, unsubstituierte oder
         substituierte, gegebenenfalls Heteroatome (anstelle von C-Atomen;
         insbesondere ausgewählt aus O, N, wie NH oder N-Alkyl, und S) aufweisende
         C₁-C₄-Alkylgruppe oder C₁-C₄-Alkoxygruppeoder C₁-C₄-Alkoxycarbonylmethylgruppe oder C₁-C₄-Alkylcarbonylmethylgruppe steht,
         Y und Z² gemeinsam mit dem bindenden Kohlenstoffatom -CN bedeuten,
         Z¹ die oben genannten Bedeutungen hat, und
         R¹ und R² jeweils wie oben definiert sind mit der Maßgabe, dass mindestens einer
         der Reste Wasserstoff bedeutet;
         und/oder Salze davon.

Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder 2-Thiobarbitursäure (4,6-Dihydroxy-2-Mercaptopyrimidin), 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3- dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mnacetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile
- als Beschleuniger mindestens ein Metallsalz und
- als Initiator mindestens ein Aldehyd und/oder Keton und mindestens ein primäres Amin, und/oder
- b2) mindestens ein Imin, welches ein oder mehrere Imin-Strukturinkremente der Formel (VI) beinhaltet: 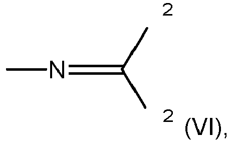 worin unabhängig voneinander:
   Q den organischen Rest des (jeweils) verwendeten Amins darstellt, oder für Wasserstoff steht; und
   R² und R³ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet; und/oder Salze davon,
   beinhaltet.

Bevorzugt liegt das Molekulargewicht der Imin-Strukturinkremente der Formel (VI) beinhaltenden Imine bei 2000 Dalton (g/mol) oder niedriger, beispielsweise bei 1000 Dalton oder niedriger. Auch die Aldehyde und/oder Ketone haben jeweils vorzugsweise Molekulargewichte in diesen Bereichen.

Dieses Härtersystem kann als fertige Härterzusammensetzung (beispielsweise mit mikroverkapselten Bestandteilen a) und b)) vorliegen oder vorzugsweise erst bei der Mischung mit weiteren Bestandteilen einer Kunstharzzusammensetzung (gewissermaßen als Zusammensetzung (Mischung)) ausgeformt werden, beispielsweise bei der Verwendung.

Die beinhalteten bzw. verwendeten Aldehyde, Ketone, Amine, Aldimine oder Ketimine sind bekannt oder nach an sich bekannten Verfahren herstellbar/erhältlich bzw. werden vorzugsweise danach erhalten. Die Imine können vor der Anwendung (z.B. zur Befestigung von Verankerungselementen) oder auch erst "in situ" synthetisiert bzw. erhalten werden. Mögliche erfindungsgemäße Verfahren sind also (t) die separate vorherige Herstellung und/oder (tt) die "in situ" Herstellung, bei der der Aldehyd/Keton und das primäre Amin auf unterschiedliche Komponenten des Befestigungssystems aufgeteilt werden und beispielsweise am Ort der Anwendung vermischt werden und/oder (ttt) die "in situ" Herstellung in einer Komponente des Befestigungssystems, bei der der Aldehyd/Keton und das primäre Amin bei der Zubereitung der jeweiligen Komponente gemeinsam vermischt werden. Insbesondere die Imine gemäß (t) werden durch Kondensation unter Abspaltung von Wasser aus ein oder mehreren Aminen mit einem oder mehreren Aldehyden bzw. Ketonen erhalten. Entsprechende Reaktionsbedingungen für die separate vorherige Umsetzung (t) sind dem Fachmann bekannt.

Beispiele für geeignete Amine und Aldehyde oder Ketone finden sich insbesondere in der DE 10 2004 035 542 A1, EP 1 329 469 A1, EP 1 975 190 A1 und der EP 2 017 260.

Die als solche zugesetzten oder zur Synthese der Imine geeigneten primären Amine umfassen beispielsweise Mono-, Di- oder Polyamine, oder Mischungen von zwei oder mehr davon. Die einsetzbaren Mono-, Di- und/oder Polyamine können sowohl linear als auch verzweigt sein. Das Molekülgerüst der Mono- und/oder Di- und/oder Polyamine kann aliphatische, heteroaliphatische, alicyclische, heterocyclische, aromatische, aliphatisch-aromatische und Silan/Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH₂), zur Ausbildung des Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin), der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Bevorzugt können auch polymere Amine verwendet werden, deren Grundstruktur statistisch oder blockweise aus Ethylen- und/oder Propylenglycoleinheiten aufgebaut ist (,aminofunktionale Polyoxyalkylene').

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) ausgewählt sein.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch entstehendes Reaktionswasser oder zugeführtes Wasser) hydrolysieren und kondensieren und so Oligomere bilden, die mehrere Aminogruppen tragen und die REACH-Definition für Polymere erfüllen. Imine aus derartigen Aminoalkylsilanen bilden daher die Grundlage für besonders bevorzugte Verkörperungen der Erfindung. Bevorzugte derartige Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyltrimethoxysilan oder 3-Aminopropyltriethoxysilan, und N-(Aminoalkyl)amino-alkyltri- oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan.

In einer weiteren besonderen Ausführungsform der Erfindungsgegenstaende können als Polyamine aminosilanisierte Füllstoffe, die primaere Aminogruppen tragen, wie aminosilanbehandeltes Quarzmehl (z.B Silbond AST(R) der Fa. Quarzwerke GmbH), aminosilanbehandelte Kieselerde (z.B. Aktisil AM(R) von Hoffmann Mineral), oder aminosilan-behandelte pyrogene Kieselsäuren, vorgesehen und beinhaltet sein.

Bei den als solche zugesetzten oder zur Synthese der Aldimine und/oder Ketimine verwendbaren bzw. geeigneten Aldehyden und Ketonen handelt es sich insbesondere um solche der Formel (VII) 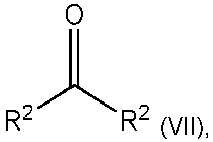 worin:
R², R³ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden alpha-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden alpha-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden alpha-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder beta-lonone genannt.

Die vorgenannten Beispiele für geeignete Amine, bevorzugte und besonders bevorzugte Aldehyde und/oder Ketone sollen den Umfang geeigneter Amine, Aldehyde und/oder Ketone nicht limitieren, sondern lediglich einige Beispielverbindungen mit den oben genannten, als geeignet, bevorzugt und als besonders bevorzugt definierten, Strukturmerkmalen zur Veranschaulichung aufzeigen.

Insbesondere bevorzugt sind auch die in den Beispielen genannten Aldehyde, Ketone bzw. synthetisierten Aldimine und/oder Ketimine und die als solche zugesetzten und/oder zur Synthese der Aldimine und/oder Ketimine verwendeten, spezifischen Amine, Ketone und Aldehyde, oder Gemische von zwei oder mehr davon.

Des Weiteren kann die Reaktivharzkomponente (A) kann übliche Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Um Peroxide oder nicht-peroxidische Härter fließfähig zu machen bzw. deren Konzentration in einer Härterkomponente einzustellen, ist es sinnvoll, Wasser oder organische Flüssigkeiten zuzusetzen.

Bevorzugt werden dabei organische Ether oder Ester, insbesondere Phthalate, Adipate, Citrate oder Phosphate, die allgemein auch als Weichmacher bezeichnet werden.

Besonders bevorzugt ist gemäß EP1371671 B1 die Verwendung von polymerisationsfähigen Ethern oder Estern, wie Allyl- oder Vinylethern bzw. Maleaten, Fumaraten oder Itaconaten, die mit den Monomeren der Reaktivharzkomponente copolymerisieren können und damit ebenfalls Monomere sind. Enthalten diese Monomere Strukturelemente aus recyclierten Altstoffen, sind dies ebenfalls Verbindungen (Verbindungen V2), die zumindest teilweise aus recyclierten Verbindungen (recyclierte Verbindungen Vr2) basieren, im Sinne der vorliegenden Erfindung.

### Füllstoffe

Zur Formulierung der erfindungsgemäßen Reaktivharzkomponente können übliche Füllstoffe verwendet werden, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon.

Besonders bevorzugt ist die Verwendung mindestens eines pulverisiertem Recyclingmaterials gemäß der bisher unveröffentlichten Europäischen Patentanmeldung EP 21 207137.7 (Anmeldetag 09.11.2021) als Füllstoff.

### Additive

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente enthalten.

Des Weiteren ist es bevorzugt, dass die Reaktivharzkomponente auch ein Thixotropiermittel enthält, vorzugsweise apolar nachbehandelte pyrogene Kieselsäure, besonders bevorzugt mit Polydimethylsiloxan (PDMS) nachbehandelte pyrogene Kieselsäure, ganz besonders bevorzugt apolar nachbehandelte pyrogene Kieselsäure.

In einer besonders bevorzugten Ausführungsform sind die Bestandteile der Reaktivharzmischung bzw. der Reaktivharzkomponente eines oder mehrere der Bestandteile, welche in den erfindungsgemäßen Beispielen genannt werden. Ganz besonders bevorzugt sind Reaktivharzmischungen bzw. Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

Das erfindungsgemäße Mehrkomponenten-Reaktivharzsystem kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Das erfindungsgemäße Mehrkomponenten-Reaktivharzsystem findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Das erfindungsgemäße Mehrkomponenten-Reaktivharzsystem wird insbesondere zur Befestigung von Verankerungsmitteln in Bohrlöchern verschiedenen Untergrunds und zum baulichen Kleben verwendet. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Ein weiterer Gegenstand der Erfindung ist die Verwendung mindestens einer Verbindung, die zumindest teilweise auf einer recyclierten Verbindung basiert, in einem Mehrkomponenten-Reaktivharzsystem mit einer Reaktivharzkomponente und/oder einer Härterkomponente zur Erhöhung der Recycling-Quote des Mehrkomponenten-Reaktivharzsystems. In einer bevorzugten Ausführungsform umfasst die Reaktivharzkomponente als Reaktivharz eine radikalisch härtbare Verbindung und die Härterkomponente ein Härtungsmittel für die radikalisch härtbare Verbindung. Für die Reaktivharzkomponente und die Härterkomponente gelten alle zuvor beschriebenen Ausführungsformen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Hinsichtlich des verwendeten PEG200DMA ist anzumerken, dass die Anzahl der Ethylenglykol-Wiederholeinheiten n nicht eindeutig ist. Aus der Produktbezeichnung, PEG200DMA, kann geschlossen werden, dass dem Monomer ein Polyethylenglykol der Molmasse 200 g/mol zugrunde liegt. Das entspricht für die Formel HO-(-CH₂-CH₂-O-)ₙ-H einem Wert für n=4,2. Berücksichtigt man bei der der Molmasse nur die Wiederholeinheiten (-CH₂-CH₂-O-)ₙ, kann n=4,5 angegeben werden. Da es sich bei PEG200, aus dem PEG200-Dimethacrylat hergestellt wird, um ein technisches Produkt handelt und die Hersteller des genannten Dimethacrylates (Sartomer, Evonik sowie GEO Speciality Chemicals) in ihren technischen Datenblättern n=4 bzw. n~4 angeben, wird primär von dieser Angabe ausgegangen.

### Liste der in den Beispielen und Referenzen verwendeten Bestandteile (Erklärung der Abkürzungen) sowie ihrer Handelsnamen und Bezugsquellen:

**Tabelle 1: In den Monomer- und Harzsynthesen verwendete Rohstoffe**

| | **Beschreibung** |
|---|---|
| Ethylenglycol | 1,2-Ethandiol, Merck KGaA |
| 1,2-Propylenglycol | 1,2-Propandiol, Merck KGaA |
| Glycerol | Bio-Glycerin E422 99,7% , Doktor Klaus |
| Trimethylolpropan | 1,1,1-Tris(hydroxymethyl)propan, Merck KGaA |
| Recycliertes MMA | Monómeros del Vallés,S.L; Terrassa (Barcelona), España |
| MDI | Diphenylmethandiisocyanat, Lupranat MIS, BASF SE |
| Tosylsäure | p-Toluolsulfonsäure, Monohydrat; Merck KGaA |
| Trinatriumphosphat | Trinatriumphosphat, wasserfrei; MercK KGaA |
| Phenothiazin | Phenothiazin, Prills; Alessa Chemie |
| 4-Hydroxy-TEMPO | 4-Hydroxy-2,2,6,6-tetramethylpiperidinyl-1-oxyl,TEMPOL, Evonik GmbH |
| TIB Kat 216 | Diocrylzinnlaurat, TIB Chemicals |
| HQME | 4-Methoxyphenol, Merck KGaA |

### Synthese von recyclierten Methacrylaten

### Monomermischung 1)

In einem Dreihalskolben mit Thermometer, Tropftrichter und Wasserabscheider wurden 120g recyceltes Methylmethacrylat und 30g 1,2-Ethylenglycol vorgelegt, sowie 0,75g p-Toluolsulfonsäure, 4mg 4-Hydroxy-TEMPO, 6 mg Phenothiazin und 15 mg 4-Methoxyphenol zugegeben.

Unter Rühren wurde die Reaktionsmischung zunächst auf 80°C erhitzt und 2 Stunden lang bei dieser Temperatur gehalten und danach nochmals 0,75g p-Toluolsulfonsäure zugegeben. Dann wurde die Temperatur bis zum Sieden erhöht und die Mischung am Sieden gehalten, so dass neben einem deutlichen Rückfluss tropfenweise Destillat (Azeotrop MMA/Methanol; Siedepunkt 64°C) abgeschieden wurde. Nach ca. 6 Stunden war die Reaktion abgeschlossen.

Der Hauptanteil des Reaktionsprodukte in dieser Synthese ist Hydroxyethylmethacrylat in einer Mischung mit Diethylenglycoldimethacrylat. Der Recycling-Anteil der hergestellten Monomermischung liegt bei ca. 50%. Analog wurden Mischungen von mono- und höherfunktionellen Methacrylaten des Propylenglycols, des Glycerins und des Trimethylolpropans hergestellt.

Durch Variation der Reaktionsbedingungen (Katalysator, Mischungsverhältnis der Edukte, Temperaturführung, Unterdruck) kann der Fachmann die Zusammensetzung des Reaktionsproduktes, insbesondere die Verteilung von mono- und höherfunktionellen Methacrylaten beeinflussen.

### Synthese von recycliertem Urethan-Methacrylat-Reaktivharz

### Reaktionsharzmischung 1)

Zu einem Ansatz, der analog zu Monomermischung 1), jedoch unter Verwendung von 1,2-Propylenglycol statt Ethylenglycol hergestellt wurde, wurden nach dem Abkühlen 0,01g TIB KAT 216, 0,03g 4-Hydroxy-TEMPO und 0,05g Phenothiazin gegeben. Nach dem Aufheizen auf 60°C wurden unter Rühren 37,5g Lupranat MIS so schnell zugetropft, dass die Temperatur auf 90°C anstieg. Diese Temperatur wurde für 2 Stunden gehalten und dann auf Raumtemperatur abgekühlt.

Der Recycling-Anteil der hergestellten Reaktionsharzmischung liegt bei ca. 35%.

**Tabelle 2: In den Reaktivharzkomponenten (A) verwendete Rohstoffe**

| | **Beschreibung** |
|---|---|
| UMA121 | Urethanmethacrylat-Harz gemäß WO2019/007667, Vergleichsbeispiel C1 Das Harz wurde als Masterbatch in Abmischung mit HPMA bzw. 1,4-BDDMA im Massenverhältnis 65/35 hergestellt und weiterverwendet. |
| mUMA | unverlängertes Urethanmethacrylat-Harz gemäß WO 2019/007667, Beispiel E1 Das Harz wurde als Masterbatch in Abmischung mit HPMA im Massenverhältnis 80/20 hergestellt und weiterverwendet. |
| bisGMA | Epoxyacrylat-Harz (verwendet als Mischung mit 1,4-BDDMA) Handelsname: Ecocryl 05345 (Fa. Momentive) |
| E2BADMA | Dimethacrylat mit jeweils 2 Ethylenoxid-Einheiten alkoxyliertem Bisphenol-A SR348L, (Fa. Sartomer) |
| 1,4-BDDMA | 1,4-Butandioldimethacrylat; Handelsname:Visiomer 1,4-BDDMA (Fa. Evonik) |
| HPMA | Hydroxypropylmethacrylat; Handelsname: Visiomer HPMA (Fa. Evonik) |
| GlyDMA | Glycerin-1,3-dimethacrylsäureester; Handelsname: Visiomer GDMA (Fa. Evonik) |
| TCDDMA | Tricyclodecanedimethanoldimethacrylate, Handelsname: SR 834 (Fa. Sartomer) |
| PEG200DMA | Polyethylenglykol(200)Dimethacrylat; Handelsname: Visiomer PEG200DMA (Fa. Evonik) |
| MEMO | 3-Methacryloxypropyltrimethoxysilan; Dynasylan MEMO; Evonik |
| Beschleuniger PT25E | Ethoxyliertes p-Toluidin, Saltigo GmbH |
| Mn(acac)₂ | Mangan(ll)acetylacetonat (Fa. SigmaAldrich) |
| TIB-Kat 808 | Kupfernaphtenat (Fa. TIB Chemicals) |
| Tempol | 4-Hydroxy-2,2,6,6-tetramethylpiperidinyloxyl; Handelsname: 4-Hydroxy-TEMPO (Fa. BASF) |
| | |
| tBBK | 4-tert.-Butylbrenzkatechin; Handelsname: keiner (Fa. Aldrich) |
| | |
| Cab-o-Sil TS720 | Hydrophobisierte, pyrogene, Kieselsäure (Fa. Cabot) |
| Quarzsand F32 | Quarzsand (Fa. Quarzwerke Frechen) |
| Ternal white | Calciumaluminatzement (Fa. Imerys SA) |
| Dyckerhoff weiß | Weißer Portlandzement CEM l 42,5 (Fa. Dyckerhoff) |
| Ziegel mehl | Gemahlener Mauerwerksziegel, Partikelgröße d₉₀ = 0,47mm; Pilosith GmbH |
| Mikrosit H20 | Feinstflugasche, Hauptbestandteile SiO2 und Al2O3 (Fa. Baumineral Kraftwerkstoffe) |

**Tabelle 3: In den beispielhaften Reaktivharzkomponenten verwendete erfindungsgemäße, recyclierte Monomere**

| | **Beschreibung** |
|---|---|
| rHEMA/rEGDMA | Monomermischung 1); enthält recyclierte HydroxyEthylmethacrylat und Ethylenglycoldimethacrylat; RQ ca. 55% |
| rHPMA/rPGDMA | Analoge Mischung recyclierter Monomere aus Hydroxypropylmethacrylat und Propylenglycoldimethacrylat; RQ ca. 50% |
| rGlyDMA | Mischung von recyclierten Glycerin-Mono-, Di und Trimethacrylaten; Glycerinanteil bio-basiert; RQ ca. 60% |
| rTMPDMA | Mischung von recyclierten Trimethylolpropan-Mono-, Di und Trimethacrylaten; RQ ca. 50% |
| rUMA | Reaktionsharzmischung 1); bestehend aus recyclierten UMA-Harz, Propylenglycoldimethacrylat und Hydroxypropylmethacrylat; RQ ca. 35% |
| rMMA | Recycliertes Methylmethacrylat; Monómeres del Vallés; RQ = 100% |

**Tabelle 4: In den Härterkomponenten (B) verwendete Bestandteile**

| | **Beschreibung** |
|---|---|
| BP40SAQ | Dibenzoylperoxid (Fa. United Initiators) |
| Benox B-50 | Dibenzoylperoxod (Fa. United Initiators) |
| Acetylbutyrolacton | α-Acetyl-γ-butyrolacton (Fa. Merck, KGaA) |
| Vestamin A139 | 1,3,3-trimethyl-N-(2-methylpropylidene)-5-[(2-methylpropylidene)amino]cyclohexanemethylamine (Fa. Evonik) |
| Diethyladipat | Diethyladipat Fa. TCI |
| KH₂PO₄ | Kaliumdihydrogenphosphat Fa. Merck KGaA |
| Aerosil 200 | Hydrophile, pyrogene Kieselsäure (Fa. Evonik) |
| CAB-O-SIL TS720 | Hydrophobisierte, pyrogene, Kieselsäure (Fa. Cabot) |
| Optigel CK | Rheologieadditiv auf Basis eines aktivierten Schichtsilikats (Fa. BYK) |
| Axilat RH23 | Xanthangum (Fa. Worlee) |
| Millisil W6 | Quarzmehl (Fa. Quarzwerke Frechen) |
| Millisil W12 | Quarzmehl (Fa. Quarzwerke Frechen) |
| Blanc fixe N | Bariumsulfat (Fa. Solvay) |
| RG4000 | Kalziniertes Aluminiumoxid (Fa. Almatis) |

### Herstellung der Reaktivharzkomponenten (A)

Alle in Tabelle 5 enthaltenen Bestandteile der jeweiligen Reaktivharzkomponenten (A) sowie Beschleuniger und Inhibitoren wurden in einen Kunststoffbecher gegeben und auf einem Magnetrührer bei 50°C bis zur Homogenität der Mischung geführt. Nach Zugabe der Kieselsäure sowie der Füllstoffe wurde von Hand mittels Holzspatel kurz vorgerührt und die Komponente im Dissolver (Fa. PC Laborsystem) 8 min bei 3500 U/m im Vakuum (80mPa) homogenisiert.

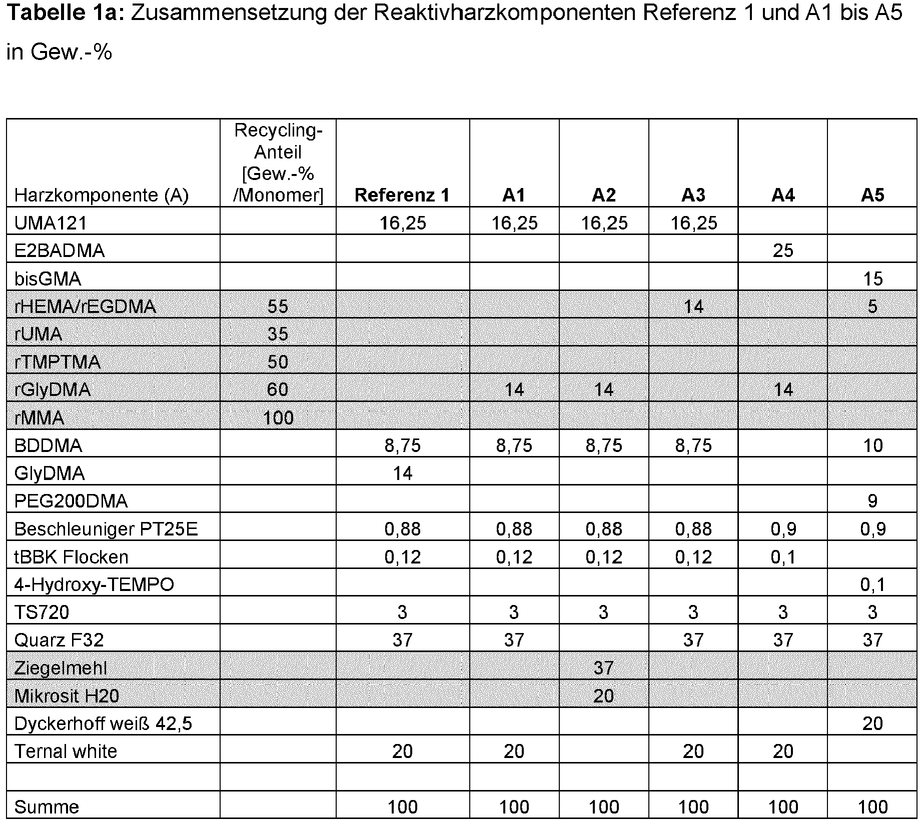

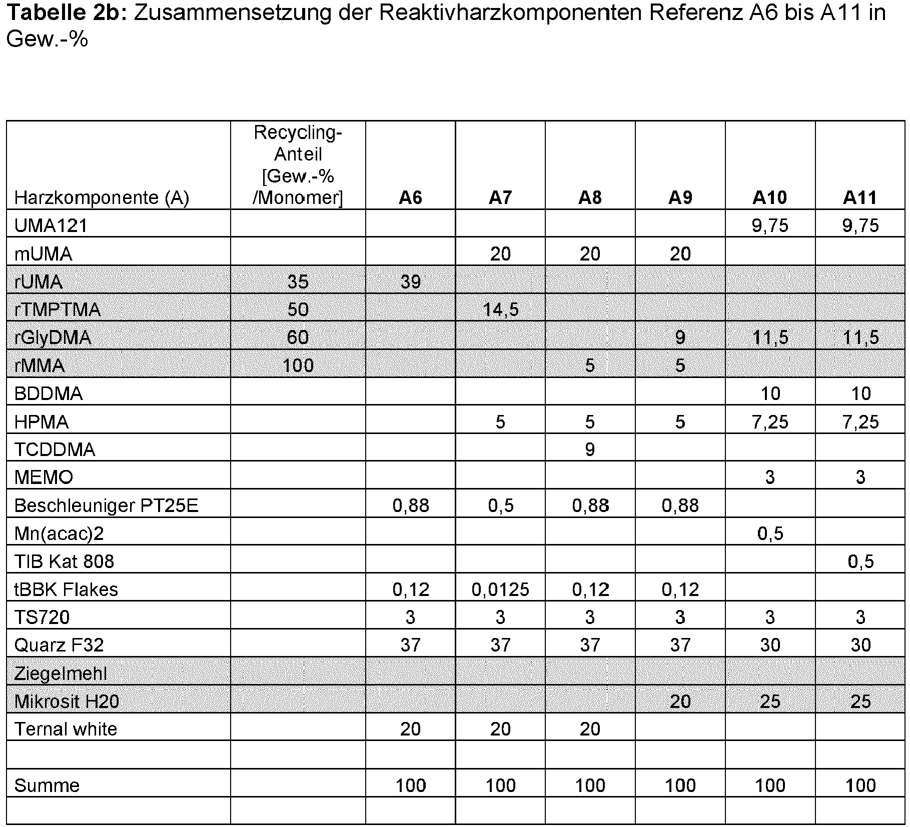

### Herstellung der Härterkomponenten

Die in den Beispielen verwendete Härterkomponenten wurden hergestellt, indem alle in Tabelle 6 der jeweiligen Härterkomponente zusammengegeben wurden und in einem Dissolver (Typ LDV) für 8 Minuten bei 3500 U/min im Vakuum bei einem Druck von 80 mPa miteinander vermischt wurden.

**Tabelle 3: Zusammensetzung der Härterkomponenten B1 bis B7 in Gew.-%**

| | **B1** | **B2** | **B3** | **B4** | **B5** | **B6** | **B7** |
|---|---|---|---|---|---|---|---|
| BP40SAQ | 14,6 | 27 | 30,2 | 2,4 | - | - | - |
| Benox B-50 | - | - | - | - | 51,8 | - | - |
| Acetylbutyrolacton | - | - | - | - | - | 10 | - |
| Vestamin A139 | - | - | - | - | - | - | 5 |
| Diethyladipat | - | - | - | - | - | 31,5 | 36,5 |
| Wasser | 20,8 | 8,8 | 4,6 | 18,7 | - | - | - |
| KH₂PO₄ | - | 0,2 | 0,2 | 0,2 | - | - | - |
| Aerosil 200 | 2,1 | - | 1 | 0,8 | - | - | - |
| TS720 | - | - | - | - | - | 3,5 | 3,5 |
| Optigel CK | - | 2,8 | - | - | - | - | - |
| Axilat RH23 | - | - | - | 0,3 | - | - | - |
| Millisil W6 | - | 44 | 44 | 56 | 31,1 | 55 | 55 |
| Millisil W12 | 62,5 | - | - | - | - | - | - |
| Mikrosit H10 | - | 17,2 | - | - | - | - | - |
| Blanc fixe N | - | - | - | - | 17,1 | - | - |
| RG4000 | - | - | 20 | 21,6 | - | - | - |
| | | | | | | | |
| Summe | 100 | 100 | 100 | 100 | 100 | 100 | 100 |
| Recycling-Quote bezogen auf die Härterkomponente [Gew.-%] | 0 | 17,2 | 0 | 0 | 0 | 0 | 0 |

### Herstellung der Mörtelmassen

Zur Herstellung der Mörtelmassen wurden jeweils eine der Reaktivharzkomponenten A1 bis A8 und eine der Härterkomponenten B1 bis B7 gemäß Tabelle 7 in Hartkartuschen im angegebenen Volumenverhältnis abgefüllt und über einen statischen Mischer (HIT-RE-M, Fa. Hilti) ins Bohrloch appliziert.

### Bestimmung der Lastwerte

Zur Bestimmung der Lastwerte der ausgehärteten Masse verwendete man eine hochfeste Ankergewindestange M12, die in ein Bohrloch mit einem Durchmesser von 14 mm und einer Bohrlochtiefe von 72 mm in C20/25 Beton mit der jeweiligen chemischen Mörtelmasse bei ca. 20°C eingedübelt wurde. Man ermittelte die mittlere Versagenslast durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur wurden die Lastwerte bestimmt. Die hierbei ermittelten mittleren Lastwerte (Durchschnitt der fünf Messungen) sind in der (nachfolgenden) Tabelle 6 aufgeführt.

**Tabelle 4a: Recycling-Quoten und Versagensverbundspannungen der Referenz-Reaktivmörtel sowie der Beispiel-Rezepturen A1 bis A5**

| Reaktionsharzkomponente (A) | Bestandteil | Referenz 1 | A1 | A2 | A3 | A4 | A5 |
|---|---|---|---|---|---|---|---|
| Härterkomponente (B) | | B1 | B1 | B2 | B2 | B3 | B5 |
| Volumenverhältnis A:B | | 3:1 | 3:1 | 3:1 | 3:1 | 5:1 | 10:1 |
| | | | | | | | |
| | | | | | | | |
| Recycling-Quote [Gew.-%] | | | | | | | |
| In (A) bezogen auf Reaktivharzmischunq | Verbindung V1 *) | 0 | 21,0 | 21,0 | 19,3 | 21,0 | 6,9 |
| | | | | | | | |
| In (A) bezogen auf Reaktivharzkomponente | Verbindung V1 *) | 0 | 8,4 | 8,4 | 7,7 | 8,4 | 2,8 |
| In (A) bezogen auf Reaktivharzkomponente | rec. Füllstoff | 0 | 0,0 | 57,0 | 0,0 | 0,0 | 0,0 |
| In (A) bezogen auf Reaktivharzkomponente | Summe | 0 | 8,4 | 65,4 | 7,7 | 8,4 | 2,8 |
| | | | | | | | |
| (In B) bezogen auf Härterkomponente | rec. Füllstoff | 0 | 0 | 17,2 | 17,2 | 0 | 0 |
| | | | | | | | |
| Dichte Reaktivharzkomponente (A) [g/cm³] | | 1,65 | 1,65 | 1,58 | 1,65 | 1,65 | 1,65 |
| Dichte Härterkomponente (B) [g/cm³] | | 1,68 | 1,67 | 1,67 | 1,67 | 1,9 | 2,1 |
| | | | | | | | |
| Recycling-Quote bezogen auf Reaktivharz-System [Gew.-%] | Summe | 0 | 6,3 | 52,8 | 10,1 | 6,8 | 2,4 |
| | | | | | | | |
| Versagens-Verbundspannung R1 [N/mm²] | | 21,0 | 22,1 | 23,2 | 15,65 | 30,2 | 19,6 |
| | | | | | | | |

| | | | | | | | |
|---|---|---|---|---|---|---|---|
| *) Verbindung V1, zumindest teilweise basierend auf einer recyclierten Verbindung | | | | | | | |

**Tabelle 5b: Recycling-Quoten und Versagensverbundspannungen der Beispiel-Rezepturen A6 bis A11**

| Reaktionsharzkomponente (A) | Bestandteil | A6 | A7 | A8 | A9 | A10 | A11 |
|---|---|---|---|---|---|---|---|
| Härterkomponente (B) | | B3 | B4 | B2 | B3 | B6 | B7 |
| Volumenverhältnis A:B | | 5:1 | 3:1 | 3:1 | 5:1 | 10:1 | 10:1 |
| | | | | | | | |
| | | | | | | | |
| Recycling-Quote [Gew.-%] | | | | | | | |
| In (A) bezogen auf Reaktivharzmischunq | Verbindung V1 *) | 34,1 | 18,1 | 12,5 | 26,0 | 16,4 | 16,4 |
| | | | | | | | |
| In (A) bezogen auf Reaktivharzkomponente | Verbindung V1 *) | 13,7 | 7,3 | 5,0 | 10,4 | 6,9 | 6,9 |
| In (A) bezogen auf Reaktivharzkomponente | rec. Füllstoff | 0,0 | 0,0 | 0,0 | 20,0 | 25,0 | 25,0 |
| In (A) bezogen auf Reaktivharzkomponente | Summe | 13,7 | 7,3 | 5,0 | 30,4 | 31,9 | 31,9 |
| | | | | | | | |
| In (B) bezogen auf Härterkomponente | rec. Füllstoff | 0 | 0 | 17,2 | 0 | 0 | 0 |
| | | | | | | | |
| Dichte Reaktivharzkomponente (A) [q/cm³] | | 1,65 | 1,65 | 1,65 | 1,61 | 1,68 | 1,67 |
| Dichte Härterkomponente (B) [g/cm³] | | 1,9 | 2,1 | 1,67 | 1,9 | 1,62 | 1,57 |
| | | | | | | | |
| Recycling-Quote bezogen auf Reaktivharz-System [Gew.-%] | Summe | 11,1 | 5,1 | 8,1 | 24,6 | 29,1 | 29,2 |
| | | | | | | | |
| Versagens-Verbundspannung R1 [N/mm²] | | 27,9 | 25,5 | 23,2 | 24,0 | 7,1 | 10,0 |
| | | | | | | | |

| | | | | | | | |
|---|---|---|---|---|---|---|---|
| *) Verbindung V1, zumindest teilweise basierend auf einer recyclierten Verbindung | | | | | | | |

Die Ergebnisse in den Tabellen 7, 8, und 9 zeigen, dass durch die Verwendung der Verbindungen, die zumindest teilweise auf einer recyclierten Verbindung basieren, Mörtelmassen für chemische Dübel hergestellt werden können, die eine deutlich verbesserte Recycling-Quote aufweisen im Vergleich zu herkömmlichen Mörtelmassen. Nach Aushärtung zeigen die Mörtelmassen ausreichende Versagenslasten.

## Patentansprüche

1. Reaktivharzmischung für die chemische Befestigung, die mindestens eine Verbindung V1 umfasst, die zumindest teilweise auf einer recyclierten Verbindung Vr1 basiert.

2. Reaktivharzmischung nach Anspruch 1, wobei die Verbindung V1, die zumindest teilweise auf einer recyclierten Verbindung Vr1 basiert, ein (Meth)acrylsäureester ist.

3. Reaktivharzmischung nach Anspruch 2, wobei die recyclierte Verbindung Vr1 recycliertes Methylmethacrylat ist.

4. Reaktivharzmischung nach Anspruch 2 oder 3, wobei der (Meth)acrylsäureester durch Umesterung von der recyclierten Verbindung Vr1, insbesondere recyclierten Methylmethacrylat, mit einem mono-, bi- oder höherfunktionellen Alkohol erhalten wird.

5. Reaktivharzmischung nach einem der vorhergehenden Ansprüche, wobei die Reaktivharzmischung mindestens ein radikalisch härtbaren Reaktivharz enthält.

6. Reaktivharzmischung nach Anspruch 5, wobei das Reaktivharz aus der Gruppe bestehend aus Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon ausgewählt ist.

7. Reaktivharzmischung nach einem der vorhergehenden Ansprüche, wobei die Reaktivharzmischung mindestens einen Reaktivverdünner umfasst.

8. Reaktivharzmischung nach Anspruch 7, wobei der Reaktivverdünner eine Verbindung V1 ist.

9. Reaktivharzmischung nach einem der vorhergehenden Ansprüche, wobei das Reaktivharz aus der Gruppe bestehend aus Verbindungen auf Urethan(meth)acrylatbasis, Verbindungen auf Epoxy(meth)acrylatbasis und Methacrylate von alkoxylierten Bisphenolen ausgewählt ist, und das Reaktivharz aus der Verbindung V1 erhalten wird.

10. Reaktivharzmischung nach einem der vorhergehenden Ansprüche, wobei die Reaktivharzmischung ferner einen Inhibitor, einen Beschleuniger und/oder weitere Additive umfasst.

11. Reaktivharzmischung nach einem der vorhergehenden Ansprüche, wobei die Reaktivharzmischung einen Anteil an masse-bilanziert recycliertem Rohstoff enthält.

12. Reaktivharzmischung nach einem der vorhergehenden Ansprüche, wobei die mindestens eine Verbindung V1 unter Verwendung eines biobasierten Rohstoffes hergestellt wurde.

13. Reaktivharzmischung nach einem der vorhergehenden Ansprüche, wobei die mindestens eine Verbindung V1 aus der Gruppe bestehend aus 1,2-Ethylenglycoldimethacrylat, Di-, Tri- oder Polyethylenglycoldimethacrylat, 1,4-Butandioldimethacrylat, 1,6-Hexandioldimethacrylat, Hydroxyethylmethacrylat, 2-, oder 3-Hydroxypropylmethacrylat, Glycerin- und Trimethylolpropanmethacrylaten ausgewählt ist.

14. Reaktivharzkomponente, umfassend eine Reaktivharzmischung nach einem der Ansprüche 1 bis 13 und anorganische Füllstoffe und/oder Additive.

15. Reaktivharzkomponente nach Anspruch 14, wobei die Reaktivharzkomponente 5 bis 60 Gew.-% der mindestens einen Verbindung V1, die auf einer recyclierten Verbindung Vr1 basiert, enthält.

16. Mehrkomponenten-Reaktivharzsystem, umfassend eine Reaktivharzkomponente nach Anspruch 14 oder 15 und eine Härterkomponente mit einem Härtungsmittel für das Reaktivharz der Reaktivharzkomponente.

17. Mehrkomponenten-Reaktivharzsystem nach Anspruch 16, wobei die Härterkomponente mindestens eine Verbindung V2, die auf einer recyclierten Verbindung Vr2 basiert, umfasst.

18. Mehrkomponenten-Reaktivharzsystem nach Anspruch 16 oder 17, wobei das Härtungsmittel ein Peroxid umfasst.

19. Mehrkomponenten-Reaktivharzsystem nach einem der Ansprüche 16 bis 18, wobei die Verbindung V2 ein Phlegmatisierungsmittel für das Härtungsmittel, insbesondere das Peroxid, oder ein polymerisationsfähiger Ester oder Ether ist.

20. Mehrkomponenten-Reaktivharzsystem nach einem der Ansprüche 16 bis 19, wobei das Mehrkomponenten-Reaktivharzsystem eine Recyclingquote von mindestens 3 Gew.-% bezogen auf das Gesamtgewicht des Mehrkomponenten-Reaktivharzsystems aufweist.

21. Mehrkomponenten-Reaktivharzsystem nach einem der Ansprüche 16 bis 20, wobei das Mehrkomponenten-Reaktivharzsystem ein Zweikomponenten-System ist.

22. Verwendung einer Reaktivharzmischung nach einem der Ansprüche 1 bis 13 oder einer Reaktivharzkomponente nach Anspruch 14 oder 15 oder eines Mehrkomponenten-Reaktivharzsystems nach einem der Ansprüche 16 bis 21 zur chemischen Befestigung von Verankerungsmitteln in Bohrlöchern oder zum baulichen Kleben.

23. Verwendung von mindestens einer Verbindung, die zumindest teilweise auf einer recyclierten Verbindung basiert, in einer Reaktivharzmischung, einer Reaktivharzkomponente oder in einem Mehrkomponenten-Reaktivharzsystem mit einer Reaktivharzkomponente und einer Härterkomponente zur Erhöhung der Recyclingquote.
